# EUROPÄISCHE PATENTANMELDUNG

(11) **EP 4 484 259 A1**
(43) Veröffentlichungstag der Anmeldung: **01.01.2025**
(21) Anmeldenummer: 24168626.0
(22) Anmeldetag: 05.04.2024
(51) Int. Cl.: B62D 15/02, B62D 13/06

(54) **RÜCKFAHRASSISTENT UND DAMIT AUSGESTATTETE FAHRZEUGE**

(30) Priorität: 30.06.2023 DE 102023117288
(71) Anmelder: CLAAS Selbstfahrende Erntemaschinen GmbH, 33428 Harsewinkel (DE)
(72) Erfinder: Thiesmann, Waldemar, 49080 Osnabrück (DE); Korthals, Timo, 33818 Leopoldshöhe (DE); Irmer, Daniel, 33442 Herzebock-Clarholz (DE); Ehlert, Christian, 33719 Bielefeld (DE); Belau, Sven Carsten, 33332 Gütersloh (DE); Töniges, Torben, 33602 Bielefeld (DE)
(74) Vertreter: CLAAS Gruppe

(57) **Zusammenfassung**

Ein Rückfahrassistent für ein Fahrzeuggespann, das eine Zugmaschine (1) und wenigstens einen Anhänger (2) umfasst, umfasst einen Eingang (13) zum Empfangen von Bildern eines Kamerasystems (14), eine Recheneinheit (12) zum Ermitteln von für die Stellung des Anhängers (2) relativ zum Zugfahrzeug (1) repräsentativer Winkelinformation (α, β, y) anhand der empfangenen Bilder, und einen Ausgang (13) zum Ausgeben von aus der ermittelten Winkelinformation abgeleiteter Lenkinformation. Die Winkelinformation (α, β, γ) definiert einen Knickwinkel (γ) zwischen einer Bezugsachse (L1) der Zugmaschine (1) und einer an die Zugmaschine (1) schwenkbar gekoppelten Deichsel (10) und einen Drehschemelwinkel (β) zwischen der Deichsel (10) und einer Bezugsachse (L2) des Anhängers (2), und dass die Recheneinheit (12) eingerichtet ist, die Winkelinformation (α, β,γ) in Beziehung zu einer gewünschten Fahrtrichtung zu setzen, eine Anpassung wenigstens eines von Knickwinkel (γ) und Drehschemelwinkel (β) abzuleiten und eine Lenkinformation an den Ausgang (13) auszugeben, der die abgeleitete Anpassung umsetzt.

## Beschreibung

Die vorliegende Erfindung betrifft einen Rückfahrassistenten und Fahrzeuge, insbesondere eine Zugmaschine oder ein Gespann mit einer Zugmaschine und wenigstens einem Anhänger, die mit einem solchen Rückfahrassistenten ausgestattet sind.

Aus DE 103 26 190 A1 ist ein Assistenzsystem für ein Gespann bekannt, in dem eine Auswerteeinheit zweierlei die Ausrichtung eines Anhängers relativ zur Zugmaschine beschreibende Winkelinformationen erfasst und auswertet, eine erste Winkelgröße, die einen Winkel zwischen in Längsrichtung orientierten Achsen des Anhängers und der Zugmaschine beschreibt, und eine zweite, die einen Winkel zwischen in der Hochrichtung orientierten Achsen des Anhängers und der Zugmaschine beschreibt. Das Dokument erwähnt auch die Möglichkeit, ein solches Assistenzsystem zur Unterstützung eines Fahrers beim Einparken oder Rückwärtsfahren einzusetzen, übersieht dabei aber das Problem, dass der Weg, den ein Anhänger zurücklegt, durch diese Winkel nur bei Vorwärtsfahrt so eindeutig festgelegt ist, dass etwa, wenn die Zugmaschine eine Kurve fährt, der Anhänger an ein zu der Kurve benachbartes Hindernis anstoßen wird oder nicht. Bei Rückwärtsfahrt muss man feststellen, dass eine Vorhersage, wie sich die besagten Winkelgrößen (und mit ihnen die Position und Orientierung des Anhängers) entwickeln werden regelmäßig scheitert.

Eine Aufgabe der Erfindung ist, ein Assistenzsystem, hier auch kurz als Rückfahrassistent bezeichnet, zu schaffen, das in der Lage ist, einen Fahrer beim Rückwärtsfahren eines Gespanns wirksam zu entlasten oder gar das Rückwärtsfahren eines Gespanns autonom zu steuern.

Ein Grund, der das Rückwärtsfahren eines Gespanns so viel schwieriger macht als das Vorwärtsfahren, ist die Deichsel, die bei vielen Gespannen Zugmaschine und Anhänger verbindet und, indem sie gegen beide drehbar ist, bei vorgegebenem Winkel zwischen den Längsachsen von Zugmaschine und Anhänger unterschiedliche Orientierungen einnehmen kann. Bei Vorwärtsfahrt konvergiert die Orientierung der Deichsel gegen einen Grenzwert, der von dem von der Zugmaschine zurückgelegten Weg bestimmt ist, so dass die Fehler eines Rechenmodells, das diesen Grenzwert der Orientierung implizit oder explizit zugrunde legt, tendenziell vernachlässigbar sind. Bei der Rückwärtsfahrt ist das Gegenteil der Fall, wenn die Orientierung der Deichsel nicht gezielt ermittelt und einer unerwünschten Entwicklung entgegengesteuert wird, neigt diese Orientierung dazu, zu divergieren, so dass Zugfahrzeug und Anhänger einander schließlich blockieren, ohne dass das Ziel erreicht wird.

Diesem Problem wird einem Aspekt der Erfindung zufolge abgeholfen, indem bei einem Rückfahrassistenten für ein Fahrzeuggespann, das eine Zugmaschine und wenigstens einen Anhänger umfasst, mit einem Eingang zum Empfangen von Bildern eines Kamerasystems, einer Recheneinheit zum Ermitteln von für die Stellung des Anhängers relativ zum Zugfahrzeug repräsentativer Winkelinformation anhand der empfangenen Bilder, und einem Ausgang zum Ausgeben von aus der ermittelten Winkelinformation abgeleiteter Lenkinformation, die Winkelinformation einen Knickwinkel zwischen einer Bezugsachse der Zugmaschine und einer an die Zugmaschine schwenkbar gekoppelten Deichsel und einen Drehschemelwinkel zwischen der Deichsel und einer Bezugsachse des Anhängers umfasst, und die Recheneinheit eingerichtet ist, die Winkelinformation in Beziehung zu einer gewünschten Fahrtrichtung zu setzen, eine Anpassung wenigstens eines von Knickwinkel und Drehschemelwinkel abzuleiten und ein Lenksignal an den Ausgang auszugeben, der die abgeleitete Anpassung umsetzt.

Die Winkelinformation könnte gewonnen werden, indem an einer Kupplung der Deichsel an die Zugmaschine und/oder einem Drehschemel des Anhängers jeweils ein Winkelsensor vorgesehen und mit der Recheneinheit verbunden ist; diese Option ist allerdings für den Feldeinsatz nicht bevorzugt, da sie eine kostspielige Anpassung und Verkabelung der Zugmaschine und des Anhängers erfordern würde und die Sensoren bzw. die Übertragungskanäle zwischen ihnen und der Recheneinheit Gefahr laufen, im Feldeinsatz beschädigt zu werden. Günstiger und robuster ist, dass die Recheneinheit eingerichtet ist, in einem Bild wenigstens eine Stirnseite und eine Flanke des Anhängers zu identifizieren und anhand von Ausdehnung und/oder Position der Stirnseite und der Flanke in dem Bild die Winkelinformation zu schlussfolgern. Um ein für das Schlussfolgern benötigtes Rechenmodell zu erstellen, können Sensoren wie oben erwähnt, an einem Prototypen des Gespanns zum Einsatz kommen.

Um eine schnelle und kostengünstige Anpassung an verschiedene Modelle von Zugmaschinen und vor allem von Anhängern zu ermöglichen, kann vorgesehen sein, dass die Recheneinheit ein lernfähiges System umfasst, das anhand von Musterbildern des Anhängers und von jedem der Musterbilder zugeordneter Soll-Auswertungsergebnisse trainiert ist, die Winkelinformation zu schlussfolgern. Das Auswertungsergebnis jedes Musterbildes kann die Positionen von Referenzpunkten der Stirnseite und der Flanke in dem Bild angeben, die es einer nachgeordneten Einheit ermöglichen, anhand bekannter Koordinaten der Referenzpunkte in einem Koordinatensystem des Anhängers die gesuchte Winkelinformation zu berechnen, oder es kann die Winkelinformation unmittelbar angeben.

Um der Recheneinheit das Trainieren der Auswertung zu erleichtern, kann die Recheneinheit ferner einen Eingang zum Empfangen von jedem Musterbild zugeordneten Soll-Auswertungsergebnissen aufweisen. Quelle der Soll-Auswertungsergebnisse kann insbesondere ein Sensor wie oben erwähnt sein, der - vorzugsweise zeitweilig - an dem Fahrzeuggespann zum Messen der Winkelinformation in Echtzeit angebracht ist.

Die Recheneinheit ist vorzugsweise eingerichtet, um anhand einer Zielvorgabe die gewünschte Fahrtrichtung autonom festzulegen und so einem Fahrer die Aufgabe, das Gespann rückwärts zu rangieren, komplett abzunehmen oder gar ein vollautonomes Navigieren des Gespanns in jeder Richtung zu unterstützen.

Um das Rückwärtsfahren einer Zugmaschine mit wechselnden Anhängern zu erleichtern, kann die Recheneinheit eingerichtet sein, einen aktuell an die Zugmaschine gekoppelten Anhänger anhand der Bilder des Kamerasystems und/oder anhand einer von dem Anhänger empfangenen Kennung zu identifizieren. So kann die Recheneinheit unter verschiedenen gespeicherten Rechenmodellen jeweils ein an den identifizierten Anhänger angepasstes auswählen und zum Ermitteln der Winkelinformation einsetzen. Einer bevorzugten Ausgestaltung sind beide Alternativen gleichzeitig verwirklicht, indem das Kamerasystem einen am Anhänger angebrachten Code, z.B. einen QR-Code, ausliest.

Gegenstand der Erfindung ist auch eine Zugmaschine oder ein Fahrzeuggespann mit einem Rückfahrassistenten wie oben beschrieben.

Für die Ermittlung der Winkelinformation ist es a priori unerheblich, ob das Kamerasystem eine am Anhänger montierte und auf die Zugmaschine ausgerichtete Kamera umfasst oder umgekehrt wenigstens eine Kamera an Bord der Zugmaschine montiert und auf den Anhänger ausgerichtet ist. Da in einem Fuhrpark die Zahl der Anhänger meist die der Zugmaschinen übersteigt, ist die zweite Alternative aus Kostengründen bevorzugt.

Das Blickfeld einer an Bord der Zugmaschine montierten Kamera sollte auch wenigstens einen Referenzpunkt der Zugmaschine enthalten, um eine mögliche Fehlausrichtung oder Änderung der Ausrichtung der Kamera an einer veränderten Position des Referenzpunkt in einem von der Kamera erzeugten Bild erkennen und kompensieren zu können.

Gegenstand der Erfindung ist ferner ein Computerprogramm-Produkt, das ausführbare Anweisungen umfasst, die, wenn sie von einem Computer ausgeführt werden, diesen befähigen, als Recheneinheit in einem Rückfahrassistenten wie oben beschrieben zu arbeiten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht von unten auf ein Gespann gemäß der Erfindung;
- Fig. 2: eine Serie von von einer Kamera des Gespanns aufgenommenen Bildern;
- Fig. 3: ein von einer Kamera eines alternativen erfindungsgemäßen Gespanns aufgenommenes Bild;
- Fig.4: die Kamera des Gespanns von Fig. 3 an einer Halterung der Zugmaschine; und
- Fig. 5: ein Diagramm zur Erläuterung der Bildauswertung durch die Recheneinheit.

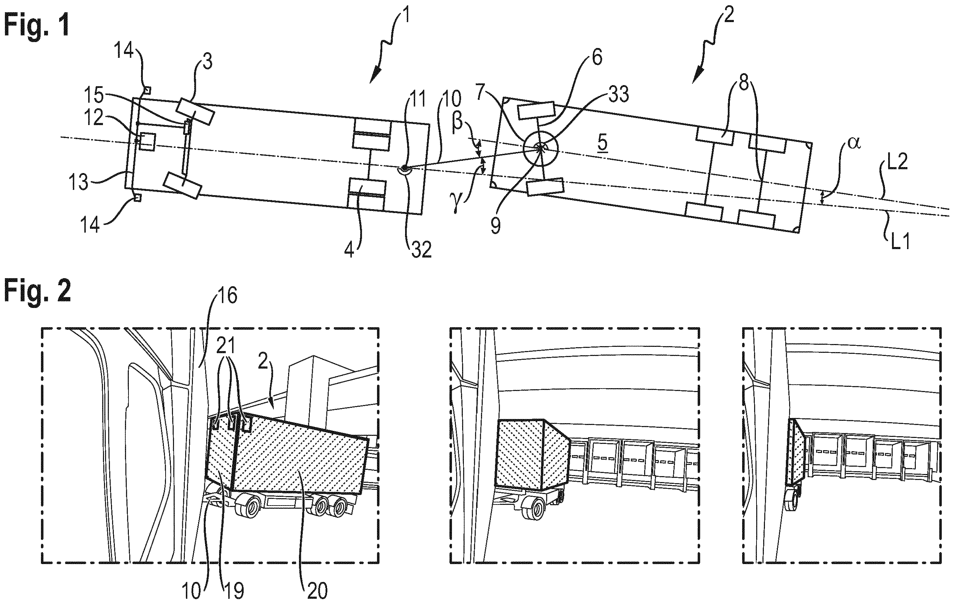

Fig. 1 zeigt in einer Ansicht von unten ein Gespann mit einer Zugmaschine 1 und einem Anhänger 2. Die Zugmaschine 1 hat hier eine gelenkte Vorderachse 3, deren Räder in einer für Kurvenfahrt eingeschlagenen Stellung gezeigt sind, und eine ungelenkte Hinterachse 4. Der Anhänger 2 hat eine Ladefläche 5, eine Vorderachse 6, die mit der Ladefläche 5 über einen Drehschemel 7 um eine vertikale Achse 9 drehbar verbunden ist, und eine oder zwei starre Hinterachsen 8. Eine Deichsel 10 ist mit dem Drehschemel 7 um die Achse 9 drehfest verbunden und an eine Kupplung 11 der Zugmaschine 1 drehbar angelenkt, so dass sich bei Vorwärtsfahrt des Gespanns die Orientierung der Vorderachse 6 an die Zugrichtung der Zugmaschine 1 anpasst.

Dadurch neigt das vordere Ende des Anhängers 2 bei Vorwärtsfahrt dazu, einer mit der Zugmaschine 1 fluchtenden Stellung zuzustreben, und das hintere Ende läuft dem vorderen nach, so dass der Weg, den der Anhänger verfolgt, für einen Fahrer der Zugmaschine halbwegs gut abzusehen ist. Der Weg des Anhängers 2 bei Rückwärtsfahrt ist ungleich schwieriger abzuschätzen. Wenn in der gezeigten Stellung die Zugmaschine 1 rückwärts fährt, dann weichen vorderes und hinteres Ende des Anhängers in unterschiedliche Richtungen aus, und der Kurs, den das hintere Ende auf seinem weiteren Weg einschlagen wird, hängt nicht nur von einem Richtwinkel α zwischen Längsachsen L1, L2 von Zugmaschine 1 und Anhänger 2 ab, sondern auch von einem Drehschemelwinkel β zwischen der Vorderachse 6 und der Längsrichtung L2 des Anhängers 2. Insbesondere der Drehschemelwinkel β ist aus der Perspektive eines Fahrers der Zugmaschine 1 kaum einzuschätzen, was das gezielte Rückwärtsrangieren des Anhängers 2 schwierig macht.

Um das Rückwärtsrangieren zu erleichtern oder gar zu automatisieren, umfasst ein Rückfahrassistent eine Recheneinheit 12 an Bord der Zugmaschine, die, z.B. über einen Bus 13 als Eingang, Bilder von einem den Anhänger 2 überwachenden Kamerasystem 14 empfängt. Über den Bus 13 ist die Recheneinheit 12 mit einer nicht gezeigten Benutzerschnittstelle verbunden, über die der Fahrer z.B. der Recheneinheit 12 ein Ziel der Rückwärtsfahrt vorgeben kann. Der Bus 13 dient ferner als Ausgang, über den die Recheneinheit 12 von den empfangenen Bildern und der Zielvorgabe Stellbefehle an ein Stellglied 15 ausgibt, um den Einschlagwinkel der Vorderachse 3 zu steuern.

Fig. 2 zeigt eine Serie von Bildern, die eine der beiden Kameras des Systems 14 im Laufe eines Rückwärtsfahrmanövers an die Recheneinheit 12 liefert. Im ersten Bild der Serie erkennt man eine Seitenflanke 16 der Zugmaschine 1, hier eines LKW, den Anhänger 2 und Teile eines Gebäudes 17 mit mehreren Ladebuchten, von denen eine, in den weiteren Bildern mit 18 bezeichnet, als Ziel des Anhängers 2 ausgewählt ist. Im ersten Bild ist der Richtwinkel α groß, und die Deichsel 10 ist aus der Mittelebene der Zugmaschine 1 zur gleichen Seite ausgelenkt wie der Anhänger 2, so dass nicht nur eine Flanke 20, sondern auch ein Stück der Deichsel 10 und eine Stirnseite 19 des Anhängers 2 im Blickfeld der Kamera liegen.

In der Recheneinheit 12 sind mathematische Modelle von mehreren Anhängern hinterlegt, die jeweils deren Gestalt und Bewegungsfreiheitsgrade beschreiben. Um von diesen das passende auszuwählen, muss die Recheneinheit 12 den aktuell an die Zugmaschine 1 gekoppelten Anhänger 2 identifizieren. Zu diesem Zweck kommen an sich beliebige bekannte Verfahren zur drahtlosen Datenübertragung vom Anhänger 2 zur Zugmaschine, z.B. das Auslesen eines RFID-Etiketts des Anhängers, in Betracht. Vorzugsweise und wie hier gezeigt, ist der Anhänger 2 an wenigstens einer Stelle, vorzugsweise an verschiedenen Stellen, mit einem QR-Code 21 versehen, der, sobald er ins Blickfeld einer Kamera des Systems 14 gerät, als Teil eines Bildes an die Recheneinheit 12 übermittelt und von dieser ausgewertet wird. Das Modell, das die Recheneinheit anhand des QR-Codes 21 auswählt, spezifiziert z.B., dass der Anhänger 2 einen quaderförmigen Aufbau besitzt, die Abmessungen von Stirnseite 20 und Flanken 19 des Aufbaus, die Position der Achse 9 relativ zum Aufbau, die Länge der Deichsel 10, etc.

Anhand der Koordinaten von Ecken der Stirnseite 20 und der Flanke 19 in den Bildern der Kamera ist die Recheneinheit 12 in der Lage, deren Position in einem auf die Zugmaschine 1 bezogenen Koordinatensystem und damit die Winkel α, β zu berechnen; diese wiederum erlauben eine exakte Vorhersage des Weges, auf dem sich der Anhänger 2 in Abhängigkeit vom an der Vorderachse 3 eingestellten Einschlagwinkel bewegen wird. So kann die Recheneinheit für jeden Punkt auf einem möglichen Weg des Anhängers 2 zum Ziel 16 den jeweils erforderlichen Einschlagwinkel ermitteln und, in einem Assistenzmodus, diesen Winkel oder eine Abweichung zwischen ihm und einem aktuell eingestellten Lenkwinkel dem Fahrer auf der Schnittstelle anzeigen, oder, in einem autonomen Modus, selber das Stellglied 15 ansteuern, um die benötigten Einschlagwinkel zu realisieren und den Anhänger, wie in den weiteren Bildern gezeigt, auf das Ziel 16 zu zu manövrieren.

Die gleichzeitige Sichtbarkeit von Teilen der Zugmaschine in den Bildern des Kamerasystems 14 ermöglicht es der Recheneinheit 12, die Position der Kameras in dem auf die Zugmaschine 1 bezogenen Koordinatensystem zu berechnen und um Störeinflüsse von Deformationen u. dgl. zu bereinigen, so dass diese keinen Einfluss auf die berechneten Winkel α, β haben.

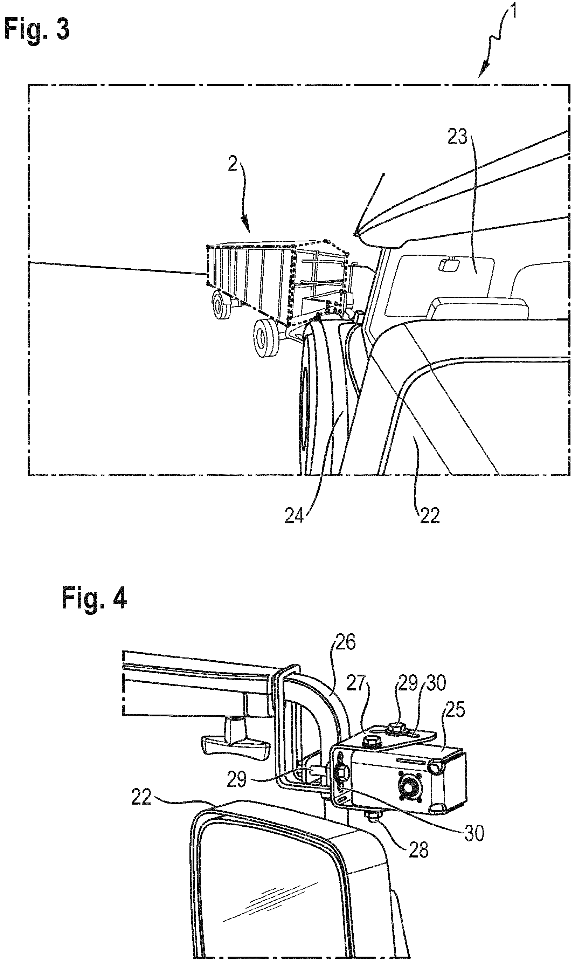

Fig. 3 zeigt ein von einer Kamera an einer Zugmaschine 1 aufgenommenes Bild analog denen der Fig. 2, wobei es sich allerdings bei der Zugmaschine 1 um einen Traktor handelt. Im Bild sichtbare Teile des Traktors sind ein Außenspiegel 22, eine Fahrerkabine 23 und ein hinterer Kotflügel 24. Wie in Fig. 4 gezeigt, ist die dort mit 25 bezeichnete Kamera 25 gemeinsam mit dem Außenspiegel 22 an einem Tragbügel 26 montiert, der von einer vorderen Ecke der Fahrerkabine 23 absteht.

Ein Haltegeschirr 27, das in der Ansicht der Fig. 4 die Kamera 25 mit dem Tragbügel 26 verbindet, ist in zwei Freiheitsgraden schwenkbar, hier indem jeweils eine Schraube 28 eine Schwenkachse der Kamera definiert und eine zweite Schraube 29 in einem auf die Schraube 28 zentrierten kreisbogenförmigen Schlitz 30 bewegbar ist. So kann einerseits die Blickrichtung der Kamera 25 auf den Anhänger 2 optimiert werden; dass gleichzeitig Teile der Zugmaschine 1 im Blickfeld der Kamera 25 liegen, ermöglicht es der Recheneinheit 12, die Position und Ausrichtung der Kamera 25 im Koordinatensystem der Zugmaschine zu berechnen und bei der Auswertung von Bildern des Anhängers 2 zu berücksichtigen.

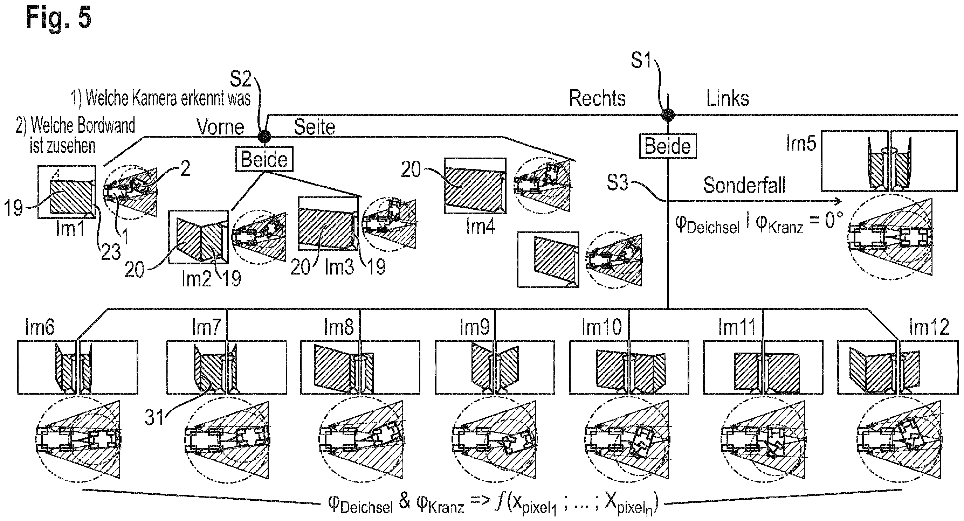

Fig. 5 zeigt veranschaulicht die Auswertung von Bildern des Kamerasystems 14 anhand einer Mehrzahl von Beispielsituationen und der sich daraus ergebenden Bilder. Die in den Legenden der Fig. genannten Winkel *ϕ_{Deichsel}, ϕ_{Kranz}* entsprechen den Winkeln γ, β in Fig. 1. In einer ersten Stufe S1 der Verarbeitung wird entschieden, ob nur eine der beiden Kameras 25 des Systems 14 den Anhänger 2 sieht, oder beide. In ersterem Fall wird in S2 entschieden, ob die Stirnseite 19, eine Flanke oder beide sichtbar sind; die entsprechenden Stellungen des Anhängers 2 relativ zur Zugmaschine sind jeweils in zu den Kamerabildern Im1 bis Im4 benachbarten Diagrammen gezeigt, wobei sich von den Kameras der Zugmaschine aus nach rechts verbreiternde Kegel jeweils die Blickfelder der Kameras darstellen. Wenn von Stirnseite 19 und Flanke 20 nur eine sichtbar ist, überprüft die Recheneinheit 12, für welche von beiden die in den Bildern erkennbaren Referenzpunkte, insbesondere ihre Ecken, mit ihren im Modell hinterlegten Abmessungen unter Berücksichtigung der Regeln der perspektivischen Abbildung am ehesten vereinbar sind und entscheidet, dass diese die sichtbare Fläche ist.

Wenn beide Kameras den Anhänger 2 sehen, kann zunächst (S3) der Sonderfall ausgeschieden werden, dass die Bilder spiegelbildlich sind (Im5); in diesem Fall fluchtet der Anhänger mit der Zugmaschine.

Verschiedene Fälle, in denen beide Kameras den Anhänger sehen, ihre Bilder aber nicht spiegelbildlich sind, und die entsprechenden Stellungen des Anhängers 2 relativ zur Zugmaschine sind in Im 6 - Im12 gezeigt. Der Knickwinkel α kann hier z.B. aus der perspektivischen Verzerrung der Flanke 20 abgeleitet werden, der Drehschemelwinkel β aus der Position einer Kante 31 zwischen Stirnseite 19 und Flanke 20.

Wiederum bezogen auf Fig. 1 bilden die Längsachsen L1, L2 zusammen mit der Deichsel 10 ein Dreieck, dessen Ecken jeweils am (hier jenseits der Grenzen der Figur liegenden) Schnittpunkt von L1 und L2, an der Achse 9 und der Kupplung 11 liegen. Der Eckwinkel des Dreiecks an der Achse 9 ist das 180°-Komplement des Drehschemelwinkels β; der Schnittwinkel der Längsachsen L1, L2 ist der Richtwinkel α. Der Knickwinkel γ zwischen Längsachse L1 und Deichsel 10 beträgt folglich β - α. Es kann daher vorgesehen werden, dass die Recheneinheit 12 das für die Berechnung der Winkel β, γ aus den Kamerabildern benötigte Modell selbst erstellt, indem an der Kupplung 11 und dem Drehschemel 7 Sensoren 32, 33 zeitweilig montiert werden, um Messwerte der Winkel β, γ - vorzugsweise drahtlos - an die Recheneinheit 12 zu übertragen. In einem nächsten Schritt wird das Gespann auf einem vorgegebenen Weg gefahren, auf dem sich diverse Einschlagwinkel der Lenkung ergeben und der Knickwinkel γ entsprechend variiert, z.B. entlang einer Acht. Auf der Grundlage der Messwerte der Winkel β, γ ist die Recheneinheit in der Lage, jedem auf dem Weg aufgenommenen Bild einen aktuellen Wert des Richtwinkels α zuzuordnen, unter dem es aufgenommen ist. Anhand der mit dem Richtwinkel α variierenden perspektivischen Verzerrung, mit der ein zweidimensional ausgedehntes Merkmal des Anhängers 2 in den Bildern erscheint, kann die Orientierung des Merkmals in einem auf den Anhänger 2 bezogenen Koordinatensystem berechnet werden. Basierend auf bekannten Positionen von Kamera 25 und Kupplung 11 in einem Koordinatensystem der Zugmaschine und Winkeln α, β kann jeweils für eine vermutete Länge der Deichsel 10 und eine vermutete Position des Merkmals im Koordinatensystem des Anhängers ein resultierender Abstand zwischen der Kamera und dem Merkmal und daraus, in Kenntnis der Brennweite der Kamera, eine vermutete Abmessung des Merkmals berechnet werden. Als wahre Länge der Deichsel und Position des Oberflächenbereichs können dann jeweils diejenigen Werte der vermuteten Länge und Position angenommen werden, die Schwankungen der Größe des Merkmals im Laufe des Weges minimieren. Wenn die so erhaltenen Werte als Modell des Anhängers 2 abgespeichert worden sind, werden die Sensoren 32, 33 nicht mehr benötigt und können wieder entfernt werden.

Ein Benutzer kann die Schnelligkeit und Sicherheit dieser Modellermittlung verbessern, indem er ein oder mehrere vorgegebene Merkmale am Anhänger 2 anbringt, z.B. jeweils in Form eines Aufklebers, der ein vorgegebenes Muster trägt, nach dem in den Bildern zu suchen die Recheneinheit 12 programmiert ist. Insbesondere kann es sich bei dem Muster um Messskalen handeln. Da deren reale Größe und Form bekannt ist, kann aus der Größe und perspektivischen Verzerrung ihrer Abbildung in einem Kamerabild unmittelbar ihr Abstand von der Kamera und ihre Orientierung im Raum berechnet werden.

### Bezugszeichen

- 1: Zugmaschine
- 2: Anhänger
- 3: Vorderachse
- 4: Hinterachse
- 5: Ladefläche
- 6: Vorderachse
- 7: Drehschemel
- 8: Hinterachse
- 9: Achse
- 10: Deichsel
- 11: Kupplung
- 12: Recheneinheit
- 13: Bus
- 14: Kamerasystem
- 15: Stellglied
- 16: Seitenflanke
- 17: Gebäude
- 18: Ladebucht, Ziel
- 19: Stirnseite
- 20: Flanke
- 21: Flanke
- 22: Außenspiegel
- 23: Fahrerkabine
- 24: Kotflügel
- 25: Kamera
- 26: Tragbügel
- 27: Haltegeschirr
- 28: Schraube
- 29: Schraube
- 30: Schlitz
- 31: Kante
- 32: Sensor
- 33: Sensor

## Patentansprüche

1. Rückfahrassistent für ein Fahrzeuggespann, das eine Zugmaschine (1) und wenigstens einen Anhänger (2) umfasst, mit einem Eingang (13) zum Empfangen von Bildern eines Kamerasystems (14), einer Recheneinheit (12) zum Ermitteln von für die Stellung des Anhängers (2) relativ zum Zugfahrzeug (1) repräsentativer Winkelinformation (α, β, γ) anhand der empfangenen Bilder, und einem Ausgang (13) zum Ausgeben von aus der ermittelten Winkelinformation abgeleiteter Lenkinformation, **dadurch gekennzeichnet, dass** die Winkelinformation (α, β, γ) einen Knickwinkel (γ) zwischen einer Bezugsachse (L1) der Zugmaschine (1) und einer an die Zugmaschine (1) schwenkbar gekoppelten Deichsel (10) und einen Drehschemelwinkel (β) zwischen der Deichsel (10) und einer Bezugsachse (L2) des Anhängers (2) definiert, und dass die Recheneinheit (12) eingerichtet ist, die Winkelinformation (α, β, γ) in Beziehung zu einer gewünschten Fahrtrichtung zu setzen, eine Anpassung wenigstens eines von Knickwinkel (γ) und Drehschemelwinkel (β) abzuleiten und eine Lenkinformation an den Ausgang (13) auszugeben, der die abgeleitete Anpassung umsetzt.

2. Rückfahrassistent nach Anspruch 1, **dadurch gekennzeichnet, dass** die Recheneinheit (12) eingerichtet ist, in einem Bild (Im1-IM12) wenigstens eine Stirnseite (19) und eine Flanke (20) des Anhängers (2) zu identifizieren und anhand von Ausdehnung und/oder Position der Stirnseite (19) und der Flanke (20) in dem Bild (Im1-Im12) die Winkelinformation (α, β, γ) zu schlussfolgern.

3. Rückfahrassistent nach Anspruch 2, **dadurch gekennzeichnet, dass** die Recheneinheit (12) ein lernfähiges System umfasst, das anhand von Musterbildern des Anhängers (12) und von jedem der Musterbilder zugeordneter Soll-Auswertungsergebnisse trainiert ist, die Winkelinformation (α, β, γ) zu schlussfolgern, wobei optional das Auswertungsergebnis jedes Musterbildes die Positionen von Merkmalen der Stirnseite (19) und der Flanke (20) in dem Bild oder die Winkelinformation (α, β, γ) angibt.

4. Rückfahrassistent nach einem der vorhergehenden Ansprüche, **dadurch gekennzeichnet, dass** die Recheneinheit (12) zum Trainieren der Auswertung ferner einen Eingang zum Empfangen von jedem Musterbild zugeordneten Soll-Auswertungsergebnissen umfasst, wobei optional der Eingang mit wenigstens einem Sensor (32, 33) verbunden ist, der an dem Fahrzeuggespann zum Messen der Winkelinformation (α, β, γ) in Echtzeit angebracht ist.

5. Rückfahrassistent nach einem der vorhergehenden Ansprüche, **dadurch gekennzeichnet, dass** die Recheneinheit (12) eingerichtet ist, anhand einer Zielvorgabe die gewünschte Fahrtrichtung autonom festzulegen.

6. Rückfahrassistent nach einem der vorhergehenden Ansprüche, **dadurch gekennzeichnet, dass** die Recheneinheit (12) eingerichtet ist, einen aktuell an die Zugmaschine (1) gekoppelten Anhänger (2) anhand der Bilder des Kamerasystems (14) und/oder anhand einer von dem Anhänger (2) empfangenen Kennung zu identifizieren.

7. Zugmaschine (1) oder Fahrzeuggespann mit einer Zugmaschine (1) und wenigstens einem Anhänger (2), **gekennzeichnet durch** einen Rückfahrassistenten nach einem der vorhergehenden Ansprüche.

8. Fahrzeuggespann nach Anspruch 7, **dadurch gekennzeichnet, dass** das Kamerasystem (14) wenigstens eine an Bord der Zugmaschine (1) montierte und auf den Anhänger (2) ausgerichtete Kamera (25) umfasst.

9. Fahrzeuggespann nach Anspruch 8, **dadurch gekennzeichnet, dass** die Kamera (25) so ausgerichtet ist, dass ihr Blickfeld wenigstens einen Referenzpunkt der Zugmaschine (1) enthält.

10. Computerprogramm-Produkt, das ausführbare Anweisungen umfasst, die, wenn sie von einem Computer ausgeführt werden, diesen befähigen, als Recheneinheit in einem Rückfahrassistenten nach einem der Ansprüche 1 bis 6 zu arbeiten.
